# EUROPEAN PATENT APPLICATION

(11) **EP 2 107 567 A1**
(43) Date of publication of application: **07.10.2009**
(21) Application number: 08154089.0
(22) Date of filing: 04.04.2008
(51) Int. Cl.: G11B 27/00, G11B 27/10, G11B 27/32

(54) **Data carrier carrying a set of machine-interpretable instructions and media content which is presented upon execution of said machine-interpretable instructions**

(71) Applicant: Deutsche Thomson OHG, 30625 Hannover (DE)
(72) Inventor: Winter, Marco, 30659 Hannover (DE)
(74) Representative: Rittner, Karsten

(57) **Abstract**

The invention is related to a data carrier carrying a set of machine-interpretable instructions and media content which is presented upon execution of said machine-interpretable instructions. The invention is further related to a data carrier interpreting device adapted for interpreting said machine-interpretable instructions in order to produce a representation of said media content.

Said data carrier carries a set of machine-interpretable instructions and media content which is presented upon execution of said machine-interpretable instructions. Said machine-interpretable instructions comprise a definition of at least one access method for accessing one or more descriptors of said media content for writing, appending, interpreting and/or editing of said descriptors.

By comprising an access method adapted for writing, appending, interpreting and/or editing descriptors of the media content, the data carrier is adapted to change the media descriptors in a way which re-establishes compatibility between a disk and a disk interpreting device being compliant to different standards.

## Description

### Background

The invention is related to a data carrier carrying a set of machine-interpretable instructions and media content which is presented upon execution of said machine-interpretable instructions. The invention is further related to a data carrier interpreting device adapted for interpreting said machine-interpretable instructions in order to produce a representation of said media content.

Typical examples of such data carriers are digital versatile disks (DVD) and Blu-ray-disks (BD). For a possibly interactive presentation of media content comprised in the disk, such disks further comprise said machine-interpretable instructions like an archive of JAVA objects which are formed from precompiled JAVA code. Upon interpretation of the JAVA objects by a suitable player, a user may be allowed, for instance, for accessing background information related to the actors and the director of a movie, viewing different versions of the movie or varying the plot of a movie. Integrating machine-interpretable instructions for content presentation onto the optical disc and making the execution of said instructions a prerequisite for accessing the multimedia content also allows for better control of access to the content. That is, such instructions may make access dependent on a password.

In order to allow for undisturbed interaction of the disk with a corresponding player, a compatibility constraint has to be met. This is commonly achieved by a standard. The standard may be updated at some point of time in order to enable features which could not be implemented with the older version. An instance of such standard updating is the change from DVD1.0 to DVD1.1.

Updating may be a critical step as it may remain unclear how legacy players will handle updated content, e.g. a DVD authored by applying new features introduced since the version update. Usually, test discs are generated and the manufactures test whether their legacy devices work with such updated discs or how many devices get in trouble. This may also result in nice new features being dropped due to incompatibilities.

A method to provide a deliberately behaviour in case of version updates with even legacy devices is shown in published European Patent Application EP1428216. This method provides rules to handle just unused data areas of the content, e.g. reserved areas. So, usage of such "reserved" areas is well defined even for legacy devices.

There is a need for an alternative updating mechanism.

### Invention

This is achieved by a data carrier comprising the features of claim 1.

Said data carrier carries a set of machine-interpretable instructions and media content which is presented upon execution of said machine-interpretable instructions. Said machine-interpretable instructions comprise a definition of at least one access method for accessing one or more descriptors of said media content for writing, appending, interpreting and/or editing of said descriptors.

By comprising an access method adapted for writing, appending, interpreting and/or editing descriptors of the media content, the data carrier is adapted to change the media descriptors in a way which re-establishes compatibility between a disk and a disk interpreting device being compliant to different standards.

Further embodiments of the invention comprise the features of one of the claims dependent on claim 1.

### Exemplary embodiments

The invention proposes adding an additional software layer to the specification. This software layer defines methods to access descriptors of the information files of the application (e.g. IFO files for DVD). The access may cover write access, append access, interpretative read access and/or edit access for each possible descriptor of the medium content.

The specification of such an application shall define, that data carrier interpreting devices are looking during initialization of said data carrier for the existence of a desciptor library (e.g. DescrLib.jar-file) on the data carrier. If the descriptor library is available, the device reads this library in. For each descriptor, whose access shall be re-directed, a class is in this library. The device re-directs its access to such descriptors appropriate to the loaded library. So, even older legacy devices in compliance with said specification may become able to handle new content.

Implementation of such an API layer is easy with JAVA. The classes of such device have to support so called Interfaces according to JAVA nomenclature. Or, abstract classes according the JAVA nomenclature have to be supported by the device. The Interfaces inform the device how to access classes of such Interfaces. So, the classes in the library on the medium are written appropriate to these Interfaces. Thus, the Interfaces must be known to the devices. Therefore, such Interfaces are defined in the specification of such an application. So, device manufactures and content authors know exactly, what they have to implement, such that the communication between device and the library loaded from the medium works as desired.

For example, BD recorders support JAVA in a different way: The first BD recorders were rather slow in the case of JAVA execution. By contrast, latest generation BD players have a much faster JAVA engine. So, disc menus based on JAVA as used in BDJive are presented in a very different speed quality. For such playback quality differences a different access to the content would be helpful. Therefore, the descriptor library may allow for adaptation of the presented menu in dependency on the available JAVA interpreter performance. For example, a content distributor could produce discs, which contain two different menus. Depending on the recorder device (first generation BD recorder, latest generation BD recorder, etc.) the API re-directs to the best fitting menu.

Advantageously, the classes in the library contain version information, which indicate the methods, which shall be used by which kind of player. The "kind of player" may be selected by the version of the specification, supported by this player. The "kind of player" may even include player type, firmware version and/or manufacturer. So, even incompatibilities related to a specific firmware may be worked around.

To become as flexible as possible, the classes in the library may have a selection method. This method shall be called by the device. Either each class has its own selection method or a further selection class provides this functionality for all loaded classes automatically. The parameters of this selection method contain information about the device like the manufacturer, firmware version, supported specification version, maybe available (optional) codecs, etc. So, the selection method decides, which methods shall be used, e.g. by setting appropriate status variables of one or more of the classes. With such a control, the loaded classes are managing itself, i.e. which methods will be used, if different methods for the same job are available. So, even very specific problems assigned only to a few legacy devices are well manageable by the authors, e.g. long time after launching the specification version for a new launched movie with very new menu features. So, the author can apply high sophisticated menu features, but applying simplified visual features for the slow first generation devices. If the user replaces his/her old device by a new one, then his/her new device applies automatically the sophisticated features with the same disc! That helps to smooth the relation between content authors and the broad available devices.

Additionally, network capable devices may even update the JAR file of a disc. That means, if later problems get known, then the content provider may offer a JAR file update. This JAR file may be stored on the device (permanently or temporally). So, for instance playback problems of a disc with specific players or versions detected after launching the disc may be corrected via such network update.

Furthermore, the user itself may provide such JAR files to the device to handle special disc in a specific manner, e.g. starting the menu with his name or a picture embedded. Such an API would provide a lot of features to the user, the manufacturer, content provider, and even third parties, e.g. advertising.

Additionally, the device may provide a method, which may be called by the loaded classes to inform the user (e.g. via OSD) that an update for this device is available and it is recommended to get this update for a worry-free playback. So, the user becomes informed automatically. This helps users to benefit the most from the device.

In the following an example of a Device class is given. If such a Device class is in the library, the device is adapted to instantiate an instance of said Device class after loading the library. The instance of said Device class configures the devise for all the specific handling as intended by the disc author.

```
 public abstract class Device {
     String manufacturer; // e.g. "Thomson"
     String deviceModel; // e.g. "BD-20"
     int firmware Version; // e.g. 105 (interpreted as 1.05)
     private Device original;
     public boolean provideOriginalDeviceSettings( Device
     original ) { /* called by the device to inform the
     library about the device properties; may be
     overwritten by the appropriate Device library class */
          this.original = original;
     }
 ...
 }
```

Next, an example of a DescriptorX Interface is given. If such a DescriptorX Interface is in the loaded library, then the device is adapted instantiate an instance of said DescriptorX Interface replacing a default DescriptorX Interface comprised in the device.

```
 public Interface DescriptorX {
     public boolean writeToDisc( ..., int sectorNumber );
     public DescriptorX readFromDisc( ..., int sectorNumber
 ) ;
     public void setDescriptorElementY( int y );
     public int getDescriptorElementY();
     public void setDescriptorElementZ( double z );
     public double getDescriptorElementZ();
 ...
 }
```

An example of a DescriptorY abstract class can be found below. If such a DescriptorY abstract class is in the loaded library, then the device is adapted instantiate an instance of said DescriptorY abstract class replacing a default DescriptorY abstract class comprised in the device.

```
 public abstract class DescriptorY {
     protected int y;
     protected double z;
     private DescriptorY original;
     private IOAccess io;
     public DescriptorY( DescriptorY original, IOAccess io
     ) { /* called by the device, may be overwritten by the
     appropriate DescriptorX library class */
          this.original = original;
          this.io = io;
     }
     abstract public boolean writeToDisc( ..., int
 sectorNumber );
     abstract public DescriptorX readFromDisc( ( ..., int
 sectorNumber );
     ... public void setDescriptorElementY( int y ) { this.y =
     y; } /* default method; may be overwritten by the
     library class */
     public int getDescriptorElementY() { return y; } /*
     default method, may be overwritten by the library
     class */
     public void setDescriptorElementZ( double z ) { this.z
     = z; } /* default method, may be overwritten by the
     library class */
     public double getDescriptorElement2() { return z } /*
     default method, may be overwritten by the library
     class */
 ... }
```

## Claims

1. Data carrier carrying a set of machine-interpretable instructions and media content which is presented upon execution of said machine-interpretable instructions comprising a definition of at least one access method for accessing one or more descriptors of said media content for interpreting, writing, appending and/or editing of said descriptors.

2. Data carrier according to claim 1, comprising a library of classes wherein at least one of the classes is adapted for redirecting access of one of the descriptors by comprising said definition.

3. Data carrier according to claim 2, wherein said at least one class comprises a version number indicating a kind of a data carrier interpreting device and access to said descriptors is redirected during interpretation of said machine-interpretable instructions by any data carrier interpreting device of said kind.

4. Data carrier according to claim 3, wherein said indicated kind comprises indications of a data carrier interpreting device type, a firmware version and/or a manufacturer.

5. Data carrier according to claim 2 or 3, wherein the at least one class comprises at least a definition of at least two access methods, said library comprises a selection class with a selection method parametrizable by a data carrier interpreting device type, a firmware version and/or a manufacturer and wherein upon execution of said parametrized selection method an appropriate status variable of the at least one class is set decisive of which of the at least two access methods is used.

6. Data carrier according to one of the claims 2-5, wherein said at least one access method is parametrizable, said at least one class further comprises a definition of a selection method parametrizable by a type of a data carrier interpreting device, a firmware version and/or a manufacturer and wherein upon execution of said parametrized selection method said at least one access method is parametrized.

7. Data carrier according to one of the claims 2-6, wherein said at least one class is a JAVA class supportive for an interface or abstract class informing a data carrier interpreting device on how to access the classes.

8. Data carrier according to one of the preceding claims, wherein said descriptors are comprised in an information file carried by said data carrier.

9. Data carrier interpreting device adapted for interpreting a data carrier according to any of the claims 1-8.

10. Data carrier interpreting device adapted for interpreting a data carrier according to any of the claims 2-8, said device being adapted to detect and access the class library during an initialisation of said data carrier.

11. Data carrier interpreting device according to claim 10, said device being adapted for updating the class library from a separate data source in dependence on a data carrier specific parameter and/or an external trigger.
